Europäisches Patentamt

European Patent Office

Office européen des brevets

(11) Publication number: **0 162 708**

**A2**

(12) **EUROPEAN PATENT APPLICATION**

(21) Application number: **85303593.9**

(22) Date of filing: **21.05.85**

(51) Int. Cl.⁴: **G 02 F 1/133**

(30) Priority: **21.05.84 JP 102287/84**
**24.05.84 JP 105588/84**

(43) Date of publication of application:
**27.11.85 Bulletin 85/48**

(84) Designated Contracting States:
**DE FR GB**

(71) Applicant: **Citizen Watch Co. Ltd.**
**2-1-1 Nishi-Shinjuku**
**Shinjuku-Ku Tokyo(JP)**

(72) Inventor: **Watanabe, Haruo**
**c/o CITIZEN WATCH CO. LTD., 840 Takeno**
**Shimotomi Tokorozawa-shi Saitama-ken(JP)**

(72) Inventor: **Tajima, Eiichi**
**c/o CITIZEN WATCH CO. LTD., 840 Takeno**
**Shimotomi Tokorozawa-shi Saitama-ken(JP)**

(72) Inventor: **Matsunaga, Masaaki**
**c/o CITIZEN WATCH CO. LTD., 840 Takeno**
**Shimotomi Tokorozawa-shi Saitama-ken(JP)**

(74) Representative: **Crisp, David Norman et al,**
**D. YOUNG & CO. 10 Staple Inn**
**London, WC1V 7RD(GB)**

(54) **Color liquid crystal device.**

(57) A color liquid crystal panel is disclosed. The panel comprises a liquid crystal, a color filter provided between a substrate and a counter electrode substrate, and a microsheet disposed between the liquid crystal and the color filter thereby separating them from each other.

EP 0 162 708 A2

Croydon Printing Company Ltd.

## Color liquid crystal device

This invention relates to a color liquid crystal device comprising a liquid crystal and a color filter.

Liquid crystal display devices for multicolor displays or full color displays instead of a black and white displays have recently been delveloped. The liquid crystal devices are panels, for example, small in size, thin in construction, having low power consumption and easily coupled to integrated circuits. Attempts have also been made to improve information density for use as an information output terminal. One is a high duty of dynamic drive due to voltage mean method and the other is an active drive due to a non-linear element such as a transistor switching, MIM element, and a diode. The development of high density pixels is required for the realisation of a full color liquid crystal panel.

Color display devices incorporating liquid crystals can be classified according to the following three types of method of operation:

(1) three primary colors, red, green and blue, are regularly arranged and respective pixels are selectively light controlled by liquid crystal elements;

(2) light control is effected in a guest-host liquid crystal display which is constructed with a three dimensional arrangement of three primary cyan, magenta and yellow colors; or

(3) light control is effected by utilizing birefringence of the liquid crystal itself.

The second of these methods requires a three layer construction so that problems such as parallax, complication in construction and difficulty in manufacture result. The third method yields problems associated with a large variation in coloring according to the visual angle, a necessity of thermal compensation and a difficulty in obtaining adequate coloring.

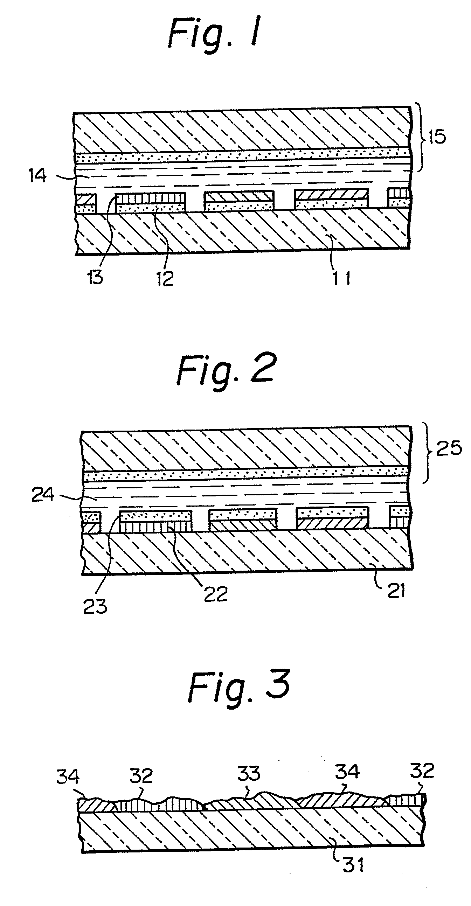

The present invention is concerned with improvements in the construction of devices operating by the first method above. Color display devices operating by the first method are illustrated schematically in the two constructions shown in Figures 1 and 2 of the accompanying drawings. In these Figures reference numerals 11 and 21 indicate substrates; 12 and 23 indicate transparent electrodes; 13 and 22 indicate color filters; 14 and 24 indicate a liquid crystal; and 15 and 25 indicate counter electrode substrates.

In the devices of Figures 1 and 2, the color filter and transparent electrode are in different positions. In the device of Figure 1, positioning the transparent electrode below the color filter causes a voltage drop and a lowering of response rate due to the electrostatic capacitance of the color filter. Particularly, in the case of dynamic drive of passive due to voltage mean method the lowering of response rate limits high duty so that it is not readily possible to make high density and large capacity displays. Moreover, it is necessary to carefully control the thickness of the color filter in order to prevent uneven contrast.

The color filter may be formed in a printing method, a photolitho method, a silver salt method, a pigment deposition method, a pigment adsorption method, or a dye transfer method. It has been found that the formation of the color filter by a printing method is preferred since the following factors may be optimized:

(1) light stability, (possibility of using transparent and light stable pigments; dyes are comparatively weak, so that strong light and long term use are contra-indicated);

(2) heat resistance (high process temperatures may be used so that a wide selection of materials may be used and a high reliability of the device may be obtained);

(3)  coloring spectrum of red, green and blue (which is necessary for a full color display);

(4)  resolution (at least 10 line/mm of scanning lines are generally required); and

(5)  economy (large area and mass production are easily possible).

It is well known that pigments having transparency, light stability and heat resistance may be dispersed in vehicles having heat resistance thereby forming an ink.  Such a pigment may be used as a metallic paint for an automobile, for example. Highly polymeric materials for vehicle paints having heat resistance are, for example, fluorine-containing plastics ladder silicones, polyimides, polyether sulfones, and polysulfones.

The method of printing used (for example, offset, intaglio, letterpress, gravure etc.) is not important, but intaglio offset printing and screen printing are preferred for their point concentration, dimensional accuracy, respective pixel form and avoidance of printing unevenness as a whole.  However the surface of the color filter leans may have an unevenness of 1 to 3 $\mu$m, as shown in Figure 3 of the accompanying drawings, in which reference numeral 31 indicates a substrate, 32 indicates a red filter, 33 indicates a green filter, and 34 indicates a blue filter.  This filter has a partial pin hole and an unevenness of 5 $\mu$m.  It is impossible to prevent such pin holes and unevenness, resulting in unevenness of coloring, contrast and response rate so that a high quality image cannot be obtained.

In order to obtain color liquid crystal devices having a high density and large capacity, the color filter should be beside the liquid crystal layer to eliminate parallax of the electrode pixels for selectively controlling the light transmission of the color filter pixels. A construction in which the electrodes are below the color filter, relative to the liquid crystal layer, causes the above mentioned problems, such as a lowering of response rate and a voltage drop. Therefore, an upper electrode construction may be adopted in which the electrodes are arranged above the color filter thereby applying a greater electric field to the liquid crystal. The disadvantages of this type of electrode construction result from the interaction of the color filter, the protection substrate film, the liquid crystal, the orientation substrate film, and the electrodes. In particular, the protection film must have a combination of properties so as to, for example, avoid deterioration caused by the mutual action of the color filter and the liquid crystal, provide a reliable substrate for a fine electrode pattern, provide a uniform resistance to the liquid crystal, provide an even color filter surface, and allow for sealing of the structure (adhesive and electrode step). For example, it is difficult for low temperature plasma $SiO_2$ or highly polymeric organic films to simultaneously satisfy the above requirements.

We have now developed a color liquid crystal device in which a very thin sheet, e.g. a glass sheet or plastic film, is provided between the color filter and the liquid crystal layer. We have found that the amount of parallax shift between the color filter pixel and the electrode pixel in the glass or plastic film, is generally important for color reproducibility. By investigating the parallax due to the thickness of the thin glass or plastic film we have found it possible to prevent color deviation with the limitation of the thickness.

We have therefore found it possible to overcome the above described disadvantages of conventional color liquid crystal panels, and to provide a color liquid crystal device having high picture quality and high reliability.

According to the present invention, there is provided a color liquid crystal device comprising a liquid crystal, a color filter between a substrate and a counter electrode substrate, and a microsheet between the liquid crystal and the color filter thereby separating one from the other.

The microsheet generally has a thickness which satisfies at least one of following conditions ($d_1$ , $d_2$ ):

$$d_1 < 4.67(b_1{'} + 0.2a_1) \quad \text{and}$$
$$d_2 < 4.67(b_2 + 0.2a_2)$$

where $\underline{a}$ is the size of an electrode pixel, $\underline{b}$ is the distance between electrode pixels, $\underline{d}$ is the thickness of the microsheet, and subscripts 1 and 2 indicate the transverse and longitudinal directions of the microsheet.

Embodiments of the invention are illustrated by way of example with reference to the accompanying drawings in which:-

Figure 1 is a partial cross-sectional view showing a conventional color liquid crystal device in which the electrodes are arranged under the color filter;

Figure 2 is a partial cross-sectional view showing another conventional color liquid crystal device in which the electrodes are arranged over the color filter;

Figure 3 is a partial cross-sectional view showing a color filter produced by a printing method;

Figure 4 is a schematic partial cross-sectional view showing a color substrate for use in accordance with the invention formed by laminating a printed color filter and a thin glass or plastic film with an adhesive;

Figure 5 is a schematic partial cross-sectional view showing a color liquid crystal device in accordance with the present invention in which a printed color filter is moulded by the adhesive; and

Figures 6 and 7 are diagrams illustrating the calculation of the thickness of the microsheet for use in a device according to the present invention.

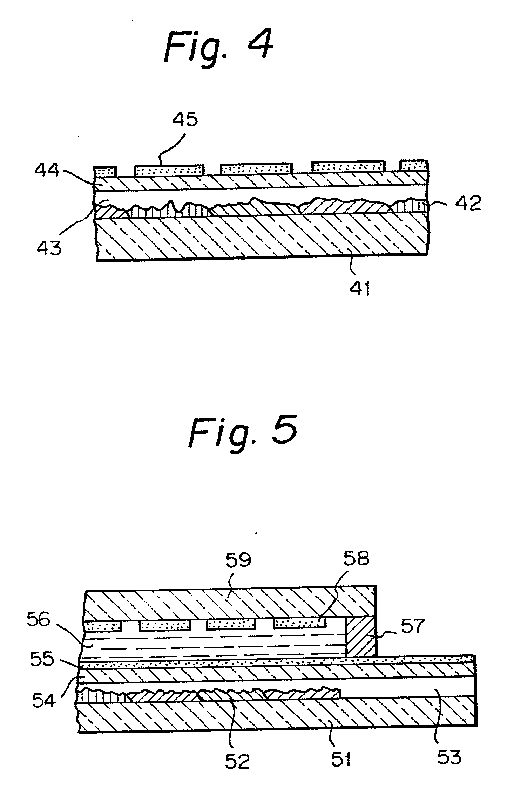

Figure 4 is a schematic partial cross-sectional view illustrating a color substrate according to the present invention. In Figure 4, reference numeral 41 indicates a substrate, 42 indicates a printed color filter, 43 indicates an adhesive material, 44 indicates a thin glass plate or a plastic film (for example, of polyether sulfone or polysulfone and the like), and 45 indicates a transparent electrode.

Figure 5 shows a color liquid crystal device, e.g. a panel, according to the present invention utilizing the thus formed color substrate. In Figure 5, reference numeral 51 indicates a substrate, 52 indicates a color filter, 53 indicates an adhesive material, 54 indicates a thin glass plate or a plastic film, 55 indicates a transparent electrode, 56 indicates a liquid crystal, and 57 a seal, 58 and 59 indicate a counter electrode and a counter substrate respectively.

The substrate 41 may be, for example, a glass plate, a plastic plate, a plastic film, or a polarizing plate. The color filter 42 printed on the substrate has an uneven surface. This is levelled by using the adhesive 43 as a buffer layer. This adhesive layer 43 is adhered to a thin glass plate or a plastic film thereby forming a composite planar color substrate. This adhesive layer may be a photosensitive adhesive, a thermohardening adhesive, a pressure sensitive adhesive, a thermosensitive adhesive and the like. It has been found that a photosensitive adhesive is generally preferable in view of the liquid membrane effect, heat resistance, and time.

The color filter 42 conveniently comprises red filter elements, green filter elements and blue filter elements which are arranged in a regular order. These color filters are formed by different pigments. For example, the following pigments manufactured by BASF and commercially available may be utilized: red, PALIOGEN RED-K 3580 (trade name); green, a combination of HELIOGEN GREEN G 9360 (trade name) and PALIOLOL YELLOW L 0960 (trade name); and blue, FANAL BLUE D 6340 (trade name).

One embodiment of a color liquid crystal device comprising a composite color substrate is schematically shown in Figure 5. A color filter 52 is completely encased by the adhesive 53. This is advantageous in preventing discoloration and color deterioration of the color filter.

The use of a transparent electrode may eliminate bumps due to the unevenness of the color filter together with the effect of the thin glass plate 54 and the adhesive 53. This is generally important to prevent disconnection caused by cracking and peeling of the electrode 55. It is very difficult to apply the surface shape and steps of the color filter uniformly to a thickness of less then 1 $\mu$m, even by a resin application method. According to such a construction, the seal 57 can also be adhered stably so that, necessary condition is satisfied as a liquid crystal display device.

The above is a detailed explanation of the color filter and the electrode, but there is no limitation as to the device so that the present invention may be utilized as a full liquid crystal display device regardless of type. Examples of devices include TN types using a pair of polarizing plates, GH types capable of dissolving a dye into the liquid crystal, passive systems, and active systems (TFT, MIM, diode etc). Particularly, in the case of passive systems, in order to ensure a fine electrode pattern and a high duty the thin glass or the plastic film plays an important role. In active systems it is prefereable to provide the substrate in which an active element is formed at the counter side of the color substrate.

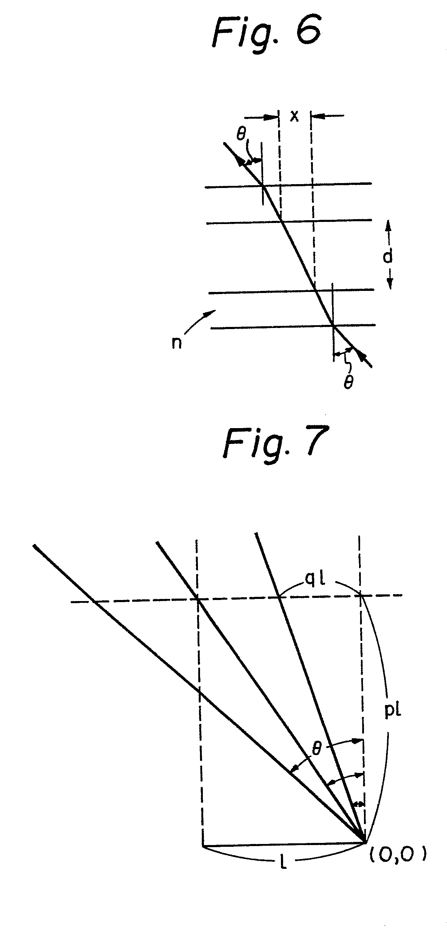

We describe below how the parallax depending on the thickness of the thin glass plate or the plastic film, that is, the parallax due to the distance between the color filter and the electrode may be precisely and theoretically calculated. Figures 6 and 7 are diagrams which will help in the calculation. In Figures 6 and 7, $x$ represents the parallax (deviation), $d$ is the distance between the color filter and the liquid crystal, $\theta$ is the angle of incidence, $n$ is the refractive index of the panel (substrate), $l$ is the transverse width of the panel, $pl$ is the image distance, and $ql$ is the distance from the origin perpendicular. The following theoretical equation may be obtained:

$$x = \frac{d \sin \theta}{\sqrt{n^2 - \sin^2 \theta}} = \frac{qd}{\sqrt{n^2 p^2 + (n^2 - 1)q^2}}$$

The refractive index of the devie is the refractive index 1.51 of the substrate (soda-lime glass, for example, crown glass), the apparent distance is changed from two times to four times of the panel width, and $d$ and $q$ are changed for showing a distance between the color filter and the liquid crystal and the order of the oblique ray, thereby obtaining calculated results which are shown in tables I - V below.

The image produced by the liquid crystal device is limited in field angle. This is particularly the case with passive systems of the TN type. Generally, the image distance is about three times the picture size so that when p=3, it is preferable to make the distance between the pixels in double systems less than 60 $\mu$m (fine line width 15 um, distance between electrode

wirings 15 μm) by taking the scanning line number, the numerical aperture (an important element for brightness and contrast of the image), the fine pattern system for large pictures (paricularly generation of disconnection) into consideration. Moreover, liquid crystal devices particularly passive devices of the TN type, are often utilized with a relation of 1:1 for the panel distance and the human distance and generally used in the priority field angle direction, so that it is not necessary to make $\underline{q}$ large, that is three or four. Therefore, when $q=1(\theta=18.4°$, substantially priority field angle) the parallax $\underline{x}$ becomes

$$x = d/4.67$$

The generally allowable range for deflection due to the parallax is described below, i.e. the deflection between electrode pixels which causes no problems. The extent of acceptable color degradation from adjacent color filter pixels has been examined under the following conditions: the color liquid crystal panel used has a pixel number of 122 x 320, a pixel size of 150 x 320 and a pitch of 170 x 340 with an upper and lower electrode structure, color filters of red, green and blue, a TN type liquid crystal mode, and a voltage mean method with 61 time division. The color liquid crystal panel is manufactured by way of trial with variable thicknesses of thin glass plates to separate the color filter from the liquid crystal. TV images are directly observed. The thin glass plates used have the identification No. 0211, produced by Corning Glass Works, U.S.A.

The adhesive layer is thin, such as about 10 μm, which can be regarded as negligible. The results observed under the above described conditions are shown below:

## Table

| Glass thickness $(\mu m)$ | observed result |
| --- | --- |
| 67 | no problem |
| 106 | no problem |
| 145 | no problem |
| 219 | slight color degradation, but practically no problem |
| 299 | comparative good image quality is obtained with front observation but practical problem arises with large field angle dependency |

Similar experimental observations are made with double upper and lower electrode construction and with a color filter in a stripe pattern. This electrode arrangement has the smallest color degradation. In this case the stripe pattern is arranged parallel with the draw-out direction of the electrode.

The deviation due to parallax with a glass thickness of 2.19 $\mu$m is as follows on the basis of these results.

$$x = 219/4.67 \fallingdotseq 47$$

The allowable rate as the color degradation for one pixel is therefore $(47 - 20)/150 = 0.18$, so that a color degradation lower than about 20% satisfies the above conditions. This can be represented by the following general expression:

$$d_1 < 4.67(b + 0.2a_1)$$
$$d_2 < 4.67(b + 0.2a_2)$$

where $\underline{a}$ is the electrode pixel size, $\underline{b}$ is the distance between electrode pixels, $\underline{d}$ is the thickness of the thin glass plate or a plastic film, and subscripts 1 and 2 indicate the transverse and longitudinal directions respectively of the glass plate or the plastic film. It is preferable to satisfy both conditions $d_1$ and $d_2$ but considering that the field angle dependency of the liquid crystal panel itself (having a good field angle spread in the uniaxial direction), the use of stripe shaped color filters, the adhesion of the color filter pixel and the electrode pixel previously shifted by a degree in the priority direction for a narrow field angle direction, and upper and lower as well as right and left directions of the panel itself, it is practically preferable to satisfy at least one of $d_1$ and $d_2$.

As described above, according to the present invention any unevenness of the color filter may be ameliorated and an upper electrode structure may be adopted so that the voltage properties are improved and a voltage drop may be avoided.

## Table I

n = 1.51    p = 2

| q | 20 | 50 | 80 | 100 | 120 | 150 | 200 | 300 | d(μ) |
|---|---|---|---|---|---|---|---|---|---|
| 0 | 0 | 0 | 0 | 0 | 0 | 0 | 0 | 0 | |
| 0.5 | 3 | 8 | 13 | 16 | 19 | 24 | 32 | 48 | |
| 1 | 6 | 15 | 24 | 31 | 37 | 46 | 62 | 93 | |
| 1.5 | 8 | 21 | 34 | 43 | 51 | 64 | 86 | 129 | |
| 2 | 10 | 26 | 42 | 52 | 63 | 79 | 105 | 158 | |
| 2.5 | 12 | 30 | 48 | 60 | 72 | 90 | 120 | 181 | |
| 3 | 13 | 33 | 52 | 66 | 79 | 99 | 132 | 198 | |
| 3.5 | 14 | 35 | 56 | 70 | 84 | 105 | 140 | 210 | |
| 4 | 14 | 36 | 58 | 73 | 88 | 110 | 147 | 220 | |

## Table II

n = 1.51    p = 2.5

| q | 20 | 50 | 80 | 100 | 120 | 150 | 200 | 300 | d(μ) |
|---|---|---|---|---|---|---|---|---|---|
| 0 | 0 | 0 | 0 | 0 | 0 | 0 | 0 | 0 | |
| 0.5 | 2 | 6 | 10 | 13 | 15 | 19 | 26 | 39 | |
| 1 | 5 | 12 | 20 | 25 | 30 | 38 | 50 | 76 | |
| 1.5 | 7 | 18 | 28 | 36 | 43 | 54 | 72 | 108 | |
| 2 | 9 | 22 | 36 | 45 | 54 | 68 | 90 | 136 | |
| 2.5 | 10 | 26 | 42 | 52 | 63 | 79 | 105 | 158 | |
| 3 | 11 | 29 | 47 | 59 | 70 | 88 | 118 | 177 | |
| 3.5 | 12 | 31 | 51 | 63 | 76 | 95 | 127 | 191 | |
| 4 | 13 | 33 | 54 | 67 | 81 | 101 | 135 | 203 | |

## Table III

n = 1.51    p = 3

| q | 20 | 50 | 80 | 100 | 120 | 150 | 200 | 300 | d(μ) |
|---|---|---|---|---|---|---|---|---|---|
| 0 | 0 | 0 | 0 | 0 | 0 | 0 | 0 | 0 | |
| 0.5 | 2 | 5 | 8 | 10 | 13 | 16 | 21 | 32 | |
| 1 | 4 | 10 | 17 | 21 | 25 | 32 | 42 | 64 | |
| 1.5 | 6 | 15 | 24 | 31 | 37 | 46 | 62 | 93 | |
| 2 | 7 | 19 | 31 | 39 | 47 | 59 | 78 | 118 | |
| 2.5 | 9 | 23 | 37 | 46 | 56 | 70 | 93 | 140 | |
| 3 | 10 | 26 | 42 | 52 | 63 | 79 | 105 | 158 | |
| 3.5 | 11 | 29 | 46 | 58 | 69 | 87 | 116 | 174 | |
| 4 | 12 | 31 | 49 | 62 | 74 | 93 | 124 | 187 | |

Table   IV

n = 1.51    p = 3.5

| q | 20 | 50 | 80 | 100 | 120 | 150 | 200 | 300 | d($\mu$) |
|---|----|----|----|-----|-----|-----|-----|-----|------|
| 0 | 0 | 0 | 0 | 0 | 0 | 0 | 0 | 0 | |
| 0.5 | 1 | 4 | 7 | 9 | 11 | 14 | 18 | 28 | |
| 1 | 3 | 9 | 14 | 18 | 22 | 27 | 37 | 55 | |
| 1.5 | 5 | 13 | 21 | 27 | 32 | 40 | 54 | 81 | |
| 2 | 6 | 17 | 27 | 34 | 41 | 52 | 69 | 104 | |
| 2.5 | 8 | 20 | 33 | 41 | 50 | 62 | 83 | 125 | |
| 3 | 9 | 23 | 38 | 47 | 57 | 71 | 95 | 143 | |
| 3.5 | 10 | 26 | 42 | 52 | 63 | 79 | 105 | 158 | |
| 4 | 11 | 28 | 45 | 57 | 68 | 86 | 114 | 172 | |

Table  V

n = 1.51    p = 4

| q | 20 | 50 | 80 | 100 | 120 | 150 | 200 | 300 | d($\mu$) |
|---|----|----|----|-----|-----|-----|-----|-----|------|
| 0 | 0 | 0 | 0 | 0 | 0 | 0 | 0 | 0 | |
| 0.5 | 1 | 4 | 6 | 8 | 9 | 12 | 16 | 24 | |
| 1 | 3 | 8 | 13 | 16 | 19 | 24 | 32 | 48 | |
| 1.5 | 4 | 11 | 19 | 23 | 28 | 35 | 47 | 71 | |
| 2 | 6 | 15 | 24 | 31 | 37 | 46 | 62 | 93 | |
| 2.5 | 7 | 18 | 29 | 37 | 44 | 56 | 74 | 112 | |
| 3 | 8 | 21 | 34 | 43 | 51 | 64 | 86 | 129 | |
| 3.5 | 9 | 24 | 38 | 48 | 58 | 72 | 96 | 145 | |
| 4 | 10 | 26 | 42 | 52 | 63 | 79 | 105 | 158 | |

CLAIMS:

1. A color liquid crystal device comprising a liquid crystal and a color filter between a substrate and a counter electrode substrate, characterised in that a microsheet is disposed between the liquid crystal and the color filter thereby separating one from the other.

2. A color liquid crystal device as claimed in claim 1, characterised in that the microsheet has a thickness which satisfies at least one of following conditions ($d_1$, $d_2$):

$$d_1 < 4.67(b_1 + 0.2a_1)$$
$$d_2 < 4.67(b_2 + 0.2a_2)$$

where $a$ is the size of an electrode pixel, $b$ is the distance between electrode pixels, $d$ is the thickness of the microsheet, and subscripts 1 and 2 indicate the transverse and longitudinal directions of the microsheet.

3. A color liquid crystal device as claimed in either of claims 1 and 2, characterised in that an adhesive material is provided between the microsheet and the color filter.

4. A color liquid crystal device as claimed in claim 3, characterised in that the adhesive material is a photosensitive resin.

5. A color liquid crystal device as claimed in any one of the preceding claims, characterised in that the color filter is formed by a printing method.

6. A color liquid crystal device as claimed in any one of the preceding claims characterised in that the color filter comprises a pigment.

7. A color liquid crystal device as claimed in any one of the preceding claims, characterised in that the microsheet is a thin glass sheet.

8. A color liquid crystal device as claimed in any one of claims 1 to 6 characterised in that the microsheet is a plastic film.

9 . A color liquid crystal device as claimed in any one of the preceding claims, characterised in that the microsheet has a thickness in the order of 20 μm – 200 μm.

10. A color liquid crystal device as claimed in any one of the preceding claims characterised in that it is in the form of a panel.

11. An image display device incorporating a color liquid crystal device according to any one of the preceding claims.

# Fig. 1

# Fig. 2

# Fig. 3

## Fig. 4

## Fig. 5

## Fig. 6

## Fig. 7